(19) Europäisches Patentamt / European Patent Office / Office européen des brevets

(11) **EP 2 011 772 A1**

(12) **DEMANDE DE BREVET EUROPEEN**

(43) Date de publication:
**07.01.2009 Bulletin 2009/02**

(51) Int Cl.:
*C04B 26/16* (2006.01)     *C08L 19/00* (2006.01)
*E01F 15/08* (2006.01)

(21) Numéro de dépôt: **08356096.1**

(22) Date de dépôt: **27.06.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **29.06.2007 FR 0704705**

(71) Demandeurs:
- **Aliapur**
  **69003 Lyon (FR)**
- **Association pour les transferts de technologie Du Mans**
  **72000 Le Mans (FR)**

(72) Inventeurs:
- **Petitrenaud, Stéphane**
  **58390 Dornes (FR)**
- **Clauzade, Catherine**
  **69003 Lyon (FR)**
- **Poulain, Nicolas**
  **72000 Le Mans (FR)**
- **Boccaccio, Guy**
  **72000 Le Mans (FR)**

(74) Mandataire: **Schouller, Jean-Philippe et al**
  **Cabinet Lavoix**
  **62, rue de Bonnel**
  **69448 Lyon Cedex 03 (FR)**

(54) **Matériau aggloméré comprenant des granulats de caoutchouc, utilisations et barrière acoustique correspondates**

(57) Ce matériau aggloméré comprend des granulats de caoutchouc, issus notamment de pneumatiques usagers non réutilisables, un liant organique et une charge. Selon l'invention, le rapport pondéral entre d'une part les granulats et, d'autre part, le liant et la charge, est nettement supérieur à 2.5.

Fig. 2

EP 2 011 772 A1

**Description**

La présente invention concerne un matériau aggloméré comprenant des granulats de caoutchouc, des utilisations de ce matériau aggloméré, ainsi qu'une barrière acoustique réalisée à partir de ce matériau aggloméré.

L'invention se propose, non seulement de fabriquer un tel matériau aggloméré, mais également de tirer parti de ses propriétés acoustiques. Dans ces conditions, elle vise également la réalisation d'une barrière anti-bruits, susceptible de border par exemple des routes ou des voies ferrées.

Dans ce domaine acoustique, on connaît déjà l'utilisation de fibres de bois, comme cela est par exemple décrit dans FR-A-2 774 940. D'après l'enseignement de ce document, les granulats de bois présentent une distribution sensiblement régulière, de sorte que la courbe de distribution granulométrique possède une pente monotone sensiblement rectiligne.

L'utilisation de cette fibre de bois présente cependant certains inconvénients. En effet, il s'agit d'un matériau relativement peu avantageux en termes de reproductibilité, en ce qui concerne sa nature et sa géométrie. De plus, les caractéristiques mécaniques de ce matériau, en particulier d'amortissement, ne se révèlent guère satisfaisantes.

Il est également connu d'employer du caoutchouc, en tant que matériau à propriété acoustique. Ainsi, FR-A-2 829 487 décrit l'utilisation de granulats de caoutchouc, provenant notamment du recyclage de pneumatiques, qui sont associés à un liant hydraulique présent dans une proportion comprise entre 20 et 60%. La granulométrie des granulats est comprise entre 0,1 mm et 50 mm, de préférence inférieure à 25 mm. Ce document met l'accent, non seulement sur les propriétés acoustiques, mais également sur les propriétés anti-vibratoires du matériau ainsi réalisé.

Cette solution alternative implique cependant d'autres inconvénients. En effet, dans cette antériorité, le liant utilisé est de nature hydraulique. Par conséquent, ce liant doit être présent en quantité élevée, en vue d'assurer une bonne tenue mécanique, ce qui est préjudiciable en termes de performances acoustiques.

Enfin on connaît par le brevet canadien 2 179 145 une barrière amortisseuse de chocs qui intègre des granulés en caoutchouc, à hauteur de 55 à 75%, un liant de type organique, à hauteur de 15 à 27%, ainsi que des charges, à hauteur de 13 à 28%. Cependant, la composition de ce matériau met avant tout l'accent sur la qualité de la tenue mécanique de la barrière finale. En revanche, ce matériau à base de caoutchouc ne se prête pas à une utilisation satisfaisante, en tant que barrière acoustique.

Ceci étant précisé, l'invention vise à remédier aux différents inconvénients de l'art antérieur évoqués ci-dessus. Elle a en particulier pour objectif la fabrication d'un matériau qui présente des propriétés acoustiques satisfaisantes, tout en s'accompagnant d'un procédé de fabrication commode.

A cet effet, elle a pour objet un matériau aggloméré comprenant des granulats de caoutchouc, issus notamment de pneumatiques usagés non réutilisables, un liant organique et éventuellement une charge, caractérisé en ce que le rapport pondéral entre d'une part les granulats et, d'autre part, l'ensemble formé par le liant et la charge éventuelle, est nettement supérieur à 2,5.

Le matériau conforme à l'invention se compose tout d'abord de granulats de caoutchouc, qui sont en particulier issus de pneumatiques usagés non réutilisables, ou PUNR.

Par ailleurs, le matériau aggloméré conforme à l'invention fait appel à un liant organique, qui permet de solidariser mutuellement les granulats, en vue d'assurer la tenue mécanique finale de ce matériau. Enfin la charge, qui est cependant optionnelle, regroupe d'éventuels autres matériaux, qui présentent en particulier des propriétés anti-feu.

Selon l'invention, le rapport noté R entre la masse de granulats de caoutchouc et l'ensemble liant et charge est nettement supérieur à 2,5. Cette valeur est par conséquent nettement supérieure à l'enseignement du brevet canadien 2 179 145.

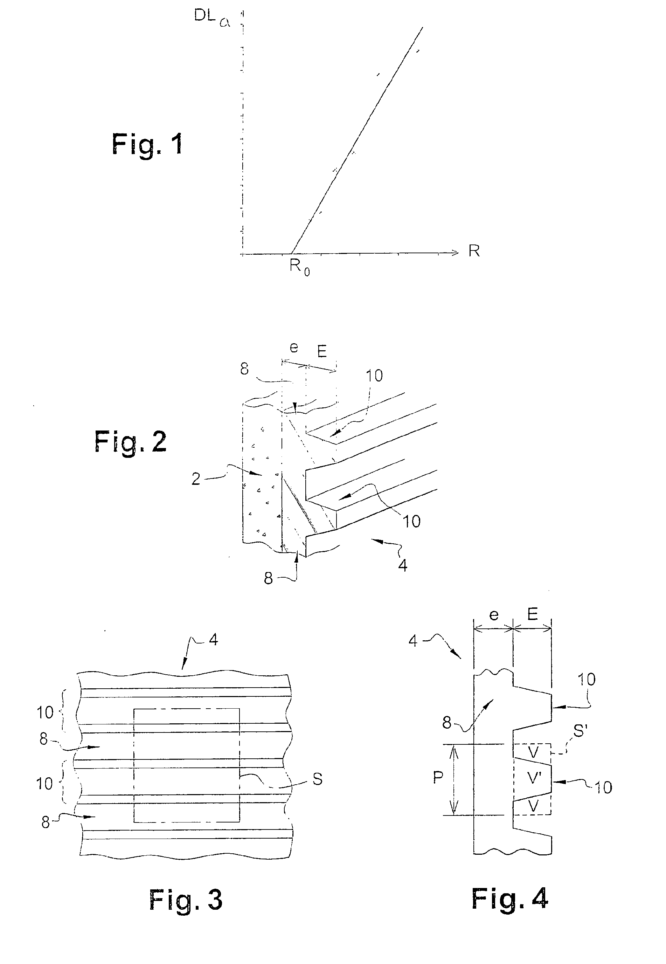

Ainsi, dans la formulation préférée de cette antériorité, on retrouve une teneur de 60% de granulats de caoutchouc, ainsi que de 40% de liant et de charge, à savoir que le rapport défini ci-dessus est de 1,5. Cette différence substantielle entre les compositions respectives de l'invention et de l'art antérieur canadien, induit des avantages substantiels chez le matériau conforme à l'invention. Ces avantages sont plus particulièrement illustrés en référence à la figure 1, qui est un graphe représentant les variations de l'indicateur unique de performance DL$\alpha$ en fonction de la valeur du rapport R défini ci-dessus.

A cet effet, on a préparé différents échantillons à partir de granulats de caoutchoucs et d'un liant polyuréthane. Ces granulats de caoutchouc sont issus de pneumatiques usagés non réutilisables, disponibles par exemple commercialement au sein de la filière de la société ALIAPUR. La granulométrie de ces différents granulats est de 0-2 mm. On ajoute par ailleurs un liant polyuréthane, commercialisé par la société STOCKMEIER sous la référence STOBICOLL.

On fait varier la fraction pondérale de ces deux composants, de manière à préparer les différents échantillons ci-après. En ce qui concerne le mode opératoire, on mélange les deux composants pendant 15 mn, puis on admet le mélange ainsi formé dans un moule pendant 60 mn, à l'intérieur duquel il règne une température de 60°C. On laisse ensuite reposer 4 heures.

On forme alors différentes rondelles plates de 42,5 mm d'épaisseur, présentant des valeurs différentes en ce qui concerne le rapport entre les fractions respectives de granulats et de liants polyuréthane. On mesure ensuite les caractéristiques intrinsèques des matériaux constitutifs de chaque rondelle et on détermine, par calcul numérique, les valeurs de l'indicateur unique de performance DLα que présenteraient des dalles de 60 mm d'épaisseur, réalisées à partir de ces différents matériaux.

| Granulats de PUNR | Liant polyuréthane STOBICOLL | PUNR / Liant PU | DLα |
|---|---|---|---|
| 77,5 | 22.5 | 3.44 | 0.7 |
| 80 | 20 | 4 | 0.9 |
| 82,5 | 17.5 | 4.71 | 1,8 |
| 85 | 15 | 5.67 | 2.2 |
| 87.5 | 12.5 | 7 | 3.9 |
| 90 | 10 | 9 | 4.4 |

L'indicateur DLα, qui est défini par la norme EN 1793-1, constitue l'indicateur standard international pour l'évaluation de la qualité des barrières acoustiques. De façon expérimentale on observe que, pour des valeurs du rapport R relativement basses, le matériau issu du mélange entre PUNR et liant n'est pas réalisable ou, en tout état de cause, présente des propriétés qui ne sont pas mesurables. Puis, pour des valeurs de R plus élevées, il est possible de réaliser ce matériau et d'en mesurer les propriétés.

A partir des différents points expérimentaux mentionnés dans le tableau ci-dessus et reportés à la figure 1, on observe que la valeur de l'indicateur DLα augmente de manière à peu près linéaire, au-dessus d'une valeur de transition notée $R_0$, qui est proche de 2,5. Par conséquent, l'invention tire parti de valeurs de R nettement supérieures à cette valeur de transition $R_0$, ce qui permet de garantir des propriétés acoustiques nettement améliorées par rapport à l'état de la technique.

On notera en outre que l'utilisation d'un liant organique est avantageuse. En effet, il suffit d'inclure une quantité relativement faible d'un tel liant organique, afin de garantir une tenue mécanique satisfaisante du matériau aggloméré, puisque ce liant organique est de nature à bien mouiller les granulats. Par conséquent, une quantité relativement faible de ce liant permet, tout en accédant à une solidarisation fiable sur le plan mécanique des granulats entre eux, de ménager des espaces entre ces granulats, ce qui est avantageux sur le plan des performances acoustiques.

Dans cette optique, on soulignera en particulier l'avantage apporté par l'invention, par comparaison avec l'enseignement de FR-A-2 829 487. En effet, dans ce document, il est fait appel à un liant de type hydraulique, qui se trouve nécessairement présent en de plus grandes quantités pour assurer une bonne tenue mécanique, ce qui est préjudiciable en termes acoustiques.

Enfin, conformément à l'invention, le fait d'utiliser des granulats de caoutchouc assure un procédé de fabrication relativement simple, puisqu'un tel matériau se prête aisément au moulage. L'emploi de pneumatiques usagés non réutilisables apporte des avantages supplémentaires sur le plan environnemental, puisqu'il autorise le recyclage de ce type de matériau.

Selon une caractéristique avantageuse de l'invention, le rapport pondéral entre d'une part les granulats de caoutchouc et, d'autre part, l'ensemble formé par le liant et la charge, est supérieur à 4, de préférence 8.

Selon une autre caractéristique avantageuse de l'invention, la proportion totale des granulats et du liant, au sein du matériau aggloméré, est supérieure à 80% en poids, de préférence à 90% en poids. En d'autres termes, la fraction pondérale de la charge est inférieure à 20%, de préférence à 10%. On notera que cette charge peut être, en particulier, un additif anti-feu.

Selon une autre caractéristique avantageuse de l'invention, les granulats de caoutchouc sont présents, dans le matériau aggloméré, à raison de plus de 75% en poids, en particulier plus de 80% en poids. En termes de limite supérieure de fraction de granulats, ces granulats de caoutchouc sont avantageusement présents à raison de moins de 95% en poids, de préférence moins de 90% en poids.

Selon une caractéristique supplémentaire, le liant organique est de préférence présent, dans le matériau aggloméré, entre 2 et 20% en poids, de préférence entre 5 et 15 % en poids.

On a explicité ci-dessus les avantages, liés à l'utilisation d'un liant organique. On choisira un tel liant, qui est capable de mouiller de façon satisfaisante les granulats, tout en étant susceptible de réagir afin de former un réseau permettant une bonne cohésion de ces granulats entre eux.

Ce liant organique peut se présenter en solution, en dispersion, ou encore à l'état « 100% réactif », à savoir sans solvant. A titre d'exemple non limitatif, on peut choisir le liant organique parmi les composés suivants polyuréthane mono ou bi-composant, résine polymère saturée, résine polyalkydes, ou encore latex vulcanisables. On peut ajouter une résine tackifiante à ce liant, afin d'améliorer les propriétés de cohésion.

Selon une caractéristique avantageuse de l'invention, la porosité du matériau aggloméré est supérieure à 20%, de préférence à 30%, encore de préférence à 40%.

De façon connue en soi, cette porosité notée $\phi$ exprime la part du volume de fluide dans le volume total de matériau. Elle est comprise entre 0, qui correspond à une limite solide, et 1 qui correspond à une limite fluide.

Cette valeur de porosité enseignée par l'invention correspond à l'obtention de bonnes propriétés acoustiques du matériau final. Par comparaison, on notera que dans les différents exemples décrits dans le brevet canadien 2 179 145, la porosité des matériaux correspondants est voisine de 0. En effet, dans cet art antérieur, on met avant tout l'accent sur les propriétés mécaniques du matériau ainsi obtenu.

Selon une autre caractéristique avantageuse de l'invention, on utilise des granulats dont la plus grande dimension est inférieure à 2 mm. Cette plus grande dimension de granulats est définie par la norme AFNOR XPT 47752.

L'emploi de tels grains, de dimensions relativement faibles, est avantageux en termes d'absorption acoustique. En revanche, utiliser une plage de taille de granulats plus étroite serait coûteux, sans induire cependant d'intérêt technique supplémentaire.

Selon une autre caractéristique avantageuse de l'invention, les granulats ont une teneur massique en élastomères d'au moins 40%.

Le procédé de fabrication du matériau aggloméré conforme à l'invention comporte tout d'abord une phase de mélange de différents composants. Puis, ce mélange est pompé, avantageusement à pression atmosphérique, en direction d'un moule destiné à lui conférer sa forme finale. Le moulage est effectué sans aucune pression de sorte à ne pas fermer la porosité. Le temps de cuisson est de l'ordre d'une heure à température de 80°C, de l'ordre de 1 jour à température ambiante, dans le cas du polyuréthane utilisé.

L'invention a également pour objet une utilisation du matériau aggloméré, tel que défini ci-dessus, pour la fabrication de barrières de protection acoustique. De telles barrières sont par exemple destinées à reposer contre une structure, bordant notamment des routes ou des voies ferrées.

L'invention a également pour objet une utilisation du matériau aggloméré, tel que défini ci-dessus, pour la fabrication d'objets à fonction anti-vibratoire. A titre d'exemple non limitatif de tels objets, on peut entre autres citer des sous-couches de dalle béton, ou encore de parquet, ou bien encore des plots amortissants pour machine vibrante.

L'invention a en outre pour objet une utilisation de pneumatiques usagés non réutilisables pour la fabrication du matériau aggloméré, tel que défini ci-dessus.

L'invention a enfin pour objet une barrière acoustique, destinée notamment à être placée contre une paroi de structure, bordant par exemple une route ou une voie ferrée, cette barrière acoustique étant réalisée au moins en partie en un matériau aggloméré tel que défini ci-dessus.

Selon d'autres caractéristiques :

- la barrière comprend une semelle d'épaisseur sensiblement constante, comprise entre 2 et 6 cm, ainsi qu'une succession de nervures, s'étendant à partir de la semelle, ces nervures présentant une épaisseur comprise entre 4 et 13 cm ainsi qu'une période comprise entre 5 et 20 cm ;
- la masse surfacique de cette barrière est comprise entre 40 et 100 kilogs par mètre carré de paroi de structure ;
- la méso porosité de la partie de cette barrière comprenant lesdites nervures est comprise entre 20 et 80%.

Une telle barrière acoustique va être décrite ci-après, en référence aux dessins annexés, donnés uniquement à titre d'exemple non limitatif, dans lesquels, outre la figure 1 évoquée ci-dessus :

- la figure 2 est une vue en perspective, illustrant une barrière acoustique conforme à l'invention, placée contre une paroi de structure ; et
- les figures 3 et 4 sont des vues respectivement de face et de côté, illustrant de façon plus précise cette barrière acoustique.

On retrouve, sur la figure 2, une paroi de structure 2, s'étendant en particulier de façon verticale. Une telle paroi peut être placée le long d'une route, d'une voie ferrée ou analogue. Elle présente une grande longueur, typiquement comprise entre quelques dizaines et quelques centaines de mètres, ainsi qu'une hauteur de quelques mètres.

Une barrière acoustique conforme à l'invention, désignée dans son ensemble par la référence 4, est placée contre la paroi de structure 2. La fixation mutuelle de cette barrière et de cette paroi est assurée par tout moyen approprié, en particulier par collage. A titre d'alternative, on peut également couler, de façon connue en soi, le béton constitutif de la paroi 2 sur le matériau de la barrière acoustique 4.

Cette barrière 4 comprend tout d'abord une semelle 8 d'épaisseur constante, qui repose contre la paroi 2. Cette épaisseur de semelle, notée $\underline{e}$, est avantageusement comprise entre 2 et 6 cm.

La barrière 4 comprend en outre différentes nervures 10, qui s'étendent de manière sensiblement horizontale lorsque la barrière repose contre la paroi de structure 2. Comme le montre plus précisément la figure 4, ces nervures sont légèrement effilées, à savoir que la hauteur de leur extrémité libre est légèrement inférieure à leur hauteur, au niveau de la jonction avec la semelle 8. De façon avantageuse, l'épaisseur E de ces nervures 10 est comprise entre 4 et 13 cm, alors que leur période P est comprise entre 5 et 20 cm.

En référence à la figure 3, qui illustre la barrière vue de face, on définit la masse surfacique de matériau, à savoir la masse présente par unité de surface de la paroi de structure 2. Sur la figure, on illustre cette surface S par un carré représenté en traits mixtes, qui présente une aire donnée, par exemple de 1 m². Dans ces conditions, cette masse surfacique de matériau est avantageusement comprise entre 40 et 100 kg/m². Cette notion permet de tenir compte de géométries de barrières complexes, de type en forme de quinconce ou en forme de chou-fleur.

En référence à la figure 4, qui est une vue de côté de la barrière, on définit la notion de méso porosité. Comme l'illustre cette figure, les nervures définissent une succession de motifs identiques, dont la période P a été définie ci-dessus. On désigne par S' la surface représentée en traits pointillés, qui est comprise entre le sommet et la base des nervures, ainsi que les deux points d'extrémité d'un motif élémentaire.

La méso porosité est alors définie comme le rapport entre le volume V d'air, à savoir le volume vide, et le volume V' de matériau au sein de cette surface. Dans ces conditions, la valeur de cette méso porosité, notée MS, est avantageusement :

$$20\% \leq MS = V/V' \leq 80\%.$$

Différents exemples de réalisation d'un matériau aggloméré conforme à l'invention, vont maintenant être donnés dans ce qui suit.

Exemple 1

On dispose de granulats de caoutchouc issus de pneumatiques usagés non réutilisables, disponibles par exemple commercialement au sein de la filière de la société ALIAPUR. La granulométrie de ces différents granulats est de 0-2 mm. On ajoute par ailleurs un liant polyuréthane, commercialisé par la société STOCKMEIER sous la référence STOBICOLL. La fraction pondérale des deux composants est respectivement de 90% de granulats et de 10% de liant organique.

On mélange ces deux composants pendant 15 minutes. Puis, on admet le mélange ainsi formé dans un moule pendant 60 minutes, à l'intérieur duquel il règne une température de 60°C. On laisse ensuite reposer 4 heures.

On forme alors une rondelle plate de 42.5 mm d'épaisseur dont on mesure les caractéristiques intrinsèques du matériau. On constate une résistivité de 14190 Nsm$^{-4}$, une porosité de 0.51 et une tortuosité de 1.90.

Puis, on détermine par calcul numérique la valeur de l'indicateur unique de performance DL$\alpha$ que présenterait une dalle d'épaisseur de 60 mm, réalisée à partir de ce matériau. La valeur de DL$\alpha$ est de 5.37.

Une telle valeur permet de se positionner en classe A2 de la norme EN 1793-1 comportant quatre catégories principales, de A1 à A4.

| Catégorie | DL$\alpha$ |
|-----------|------------|
| A1 | < 4 |
| A2 | De 4 à 7 |
| A3 | De 8 à 11 |
| A4 | Plus de 11 |

Exemple 2

On dispose des mêmes granulats de caoutchouc que dans l'exemple 1, en une granulométrie toutefois différente, puisqu'il s'agit d'un mélange. Ceci signifie que la porosité sera a priori plus basse. On ajoute par ailleurs le même liant STOBICOLL en même proportion, à savoir 90% de granulats et 10% de liant organique.

On procède ensuite au même mode opératoire de fabrication, et on réalise une rondelle plate de 42.0 mm d'épaisseur. La résistivité est de 5688 Nsm$^{-4}$, la porosité de 0.42 et la tortuosité de 1.85. On détermine une valeur de DL$\alpha$ de 4.12, pour une rondelle plate d'épaisseur de 60 mm réalisée à partir d'un tel matériau. On constate par conséquent que le choix d'une granulométrie de 0-2 mm est avantageux.

Exemple 3

On utilise les mêmes granulats de caoutchouc que dans les exemples précédents, avec un mélange de granulométrie comme dans l'exemple 2. On utilise un liant différent, dans la mesure où il s'agit d'un liant latex conforme à celui commercialisé par la société CRAY VALLEY sous la référence CRAY6. La fraction pondérale des deux composants est respectivement de 90% de granulats et 10% de liant organique.

Le mode opératoire est conforme à celui décrit en référence aux exemples précédents. On forme une rondelle plate de 44 mm d'épaisseur, dont le matériau constitutif présente une résistivité de 2849 Nsm$^{-4}$, une porosité de 0.42 et une tortuosité de 1.90. Par calcul numérique, on détermine qu'une rondelle plate d'épaisseur de 60 mm, réalisée à partir de ce matériau, présente une valeur de DL$\alpha$ de 4.09.

Exemple 4

La composition de l'exemple 1 a été mise en forme, de manière à constituer une série de créneaux, comme illustré aux figures 2 à 4. La barrière ainsi réalisée présente les valeurs numériques suivantes :

e = 6.5 cm,
E = 3.5 cm, et
P = 10cm.

L'indicateur unique de performance DL$\alpha$ est de 14, ce qui permet de se positionner dans la classe A4 de la norme EN1793-1 évoquée ci-dessus. On notera que la masse de la barrière à créneaux de l'exemple 4 est identique à celle de la dalle de l'exemple 1.

La comparaison de cet exemple 4 avec l'exemple 1 montre que la géométrie des figures 2 à 4 est particulièrement avantageuse. En effet, pour un même matériau et une même masse de ce matériau, les performances acoustiques sont sensiblement augmentées.

**Revendications**

1. Matériau aggloméré comprenant des granulats de caoutchouc, issus notamment de pneumatiques usagers non réutilisables, un liant organique et éventuellement une charge, cette charge étant notamment un additif anti-feu, **caractérisé en ce que** le rapport pondéral entre d'une part les granulats et, d'autre part, le liant et la charge éventuelle, est nettement supérieur à 2,5.

2. Matériau selon la revendication 1, **caractérisé en ce que** ce rapport pondéral est supérieur à quatre, de préférence à huit.

3. Matériau selon la revendication 1 ou 2, **caractérisé en ce que** la proportion totale des granulats et du liant dans ce matériau est supérieure à 80%, de préférence à 90% en poids.

4. Matériau selon l'une quelconque des revendications précédentes, **caractérisé en ce que** les granulats de caoutchouc sont présents, dans ce matériau, à raison de plus de 75%, en particulier plus de 80% en poids.

5. Matériau selon l'une quelconque des revendications précédentes, **caractérisé en ce que** les granulats de caoutchouc sont présents, dans ce matériau, à raison de moins de 95%, de préférence moins de 90% en poids.

6. Matériau selon l'une quelconque des revendications précédentes, **caractérisé en ce que** le liant organique est présent entre 2 et 20%, de préférence entre 5 et 15% en poids.

7. Matériau selon l'une quelconque des revendications précédentes, **caractérisé en ce que** la porosité de ce matériau aggloméré est supérieure à 20%, de préférence à 30%, encore de préférence à 40%.

8. Matériau selon l'une quelconque des revendications précédentes, **caractérisé en ce qu'**on utilise des granulats dont la plus grande dimension est inférieure à 2 mm.

9. Matériau selon l'une quelconque des revendications précédentes, **caractérisé en ce que** les granulats ont une teneur massique en élastomères d'au moins 40%.

**10.** Utilisation du matériau aggloméré conforme à l'une quelconque des revendications précédentes pour la fabrication de barrières de protection acoustique et/ou pour la fabrication d'objets à fonction anti-vibratoire.

**11.** Utilisation de pneumatiques usagés non réutilisables pour la fabrication du matériau aggloméré conforme à l'une quelconque des revendications 1 à 9.

**12.** Barrière acoustique (4), destinée notamment à être placée contre une paroi de structure (2), bordant par exemple une route ou une voie ferrée, cette barrière acoustique étant réalisée au moins en partie en un matériau aggloméré conforme à l'une quelconque des revendications 1 à 9.

**13.** Barrière acoustique selon la revendication précédente, **caractérisée en ce que** cette barrière comprend une semelle (8) d'épaisseur (e) sensiblement constante, comprise entre 2 et 6 cm, ainsi qu'une succession de nervures (10), s'étendant à partir de la semelle (8), ces nervures présentant une épaisseur (E) comprise entre 4 et 13 cm ainsi qu'une période (P) comprise entre 5 et 20 cm.

**14.** Barrière acoustique selon l'une quelconque des revendications 12 ou 13, **caractérisée en ce que** la masse surfacique de cette barrière est comprise entre 40 et 100 kilos par mètre carré de paroi de structure (2).

**15.** Barrière acoustique selon l'une quelconque des revendications 13 ou 14, **caractérisée en ce que** la méso porosité (MS) de la partie de cette barrière comprenant lesdites nervures (10) est comprise entre 20 et 80%.

Fig. 1

Fig. 2

Fig. 3

Fig. 4

Europäisches
Patentamt
European
Patent Office
Office européen
des brevets

# RAPPORT DE RECHERCHE EUROPEENNE

Numéro de la demande

EP 08 35 6096

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | CA 2 179 145 A1 (BAATZ GUENTER [CA]) 15 décembre 1997 (1997-12-15) * abrégé * * page 3, ligne 23-28 * ----- | 1-15 | INV. C04B26/16 C08L19/00 E01F15/08 |
| X | JP 09 077545 A (BRIDGESTONE CORP) 25 mars 1997 (1997-03-25) * abrégé * * alinéas [0007], [0016] * ----- | 1-12 | |
| X | WO 2007/070968 A (RENAZA RESOURCES PTY LTD [AU]; HUDSON MICHAEL JAMES [AU]) 28 juin 2007 (2007-06-28) * abrégé * * page 1, colonnes 18-19 * * page 4, ligne 25-30 * ----- | 1-15 | |
| A | EP 0 639 674 A (BAATZ GUENTER ADOLF [CA]) 22 février 1995 (1995-02-22) * le document en entier * ----- | 1-15 | |
| A,D | FR 2 829 487 A (RINCENT BTP SERVICES MATERIAUX [FR]) 14 mars 2003 (2003-03-14) * le document en entier * ----- | | DOMAINES TECHNIQUES RECHERCHES (IPC) C04B C08L E01F |

Le présent rapport a été établi pour toutes les revendications

| Lieu de la recherche | Date d'achèvement de la recherche | Examinateur |
|---|---|---|
| Munich | 2 octobre 2008 | Gattinger, Irene |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 35 6096

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-10-2008

| Document brevet cité au rapport de recherche | | Date de publication | Membre(s) de la famille de brevet(s) | | Date de publication |
|---|---|---|---|---|---|
| CA 2179145 | A1 | 15-12-1997 | AUCUN | | |
| JP 9077545 | A | 25-03-1997 | AUCUN | | |
| WO 2007070968 | A | 28-06-2007 | AUCUN | | |
| EP 0639674 | A | 22-02-1995 | CA | 2104311 A1 | 19-02-1995 |
| | | | GR | 3025177 T3 | 27-02-1998 |
| | | | IL | 110653 A | 08-02-1998 |
| | | | US | 5336016 A | 09-08-1994 |
| FR 2829487 | A | 14-03-2003 | EP | 1425253 A1 | 09-06-2004 |
| | | | WO | 03022775 A1 | 20-03-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2774940 A
- FR 2829487 A
- CA 2179145